# EUROPEAN PATENT APPLICATION

(11) **EP 4 746 199 A1**
(43) Date of publication of application: **20.05.2026**
(21) Application number: 24839974.3
(22) Date of filing: 03.07.2024
(51) Int. Cl.: H01Q 3/02, G01B 11/26, G01B 21/22

(54) **APPARATUS AND METHOD FOR CONTROLLING DIRECTION OF ELECTRONIC DEVICE**

(30) Priority: 10.07.2023 KR 20230088940; 01.07.2024 KR 20240086008
(71) Applicant: KMW Inc., Hwaseong-si, Gyeonggi-do 18462 (KR)
(72) Inventor: LEE, Joo Hoon, Anyang-si Gyeonggi-do 14102 (KR); KIM, Hee, Osan-si Gyeonggi-do 18131 (KR); PARK, Dae Myung, Hwaseong-si Gyeonggi-do 18443 (KR); RYU, Jeoung Jun, Anyang-si Gyeonggi-do 13988 (KR); KIM, Dong Hee, Pyeongtaek-si Gyeonggi-do 17850 (KR); CHOI, Jae Woo, Osan-si Gyeonggi-do 18111 (KR); LEE, Woo Kyung, Gwangmyeong-si Gyeonggi-do 14345 (KR); KIM, Hee Sub, Seongnam-si Gyeonggi-do 13599 (KR); CHOI, Young Keun, Seoul 02844 (KR); KANG, Sung Hune, Yongin-si Gyeonggi-do 16941 (KR); CHOI, In Hwa, Yongin-si Gyeonggi-do 17148 (KR); KIM, Do Youn, Osan-si Gyeonggi-do 18121 (KR)
(74) Representative: impuls legal PartG mbB
(86) International application number: PCT/KR2024/009332
(87) International publication number: WO 2025/014161

(57) **Abstract**

An apparatus for controlling the direction of an electronic device, according to the present invention, comprises: a motor for adjusting a rotation angle of the electronic device; a sensor for detecting the current rotation angle of the electronic device; and a control unit for rotating the electronic device from the current rotation angle to a target rotation angle by operating the motor when the target rotation angle of the electronic device is input, and thus the electronic device is automatically rotated at the target rotation angle when a worker inputs the target rotation angle of the electronic device into a controller.

## Description

### Technical Field

The present disclosure relates to an apparatus and method for controlling the direction of an electronic device, and more particularly, to an apparatus and method for controlling the direction of an electronic device according to input of a target rotation angle of the electronic device.

### Background Art

The position and angle of an electronic device, such as an antenna installed at a mobile communication base station and a lighting device installed at a sports stadium, should be determined according to a precise design.

For example, the installation position of an antenna is determined according to a result of a network design in which coverage and traffic are taken into consideration. Further, communication strength between a mobile communication terminal and the antenna may vary depending on an orienting direction of the antenna. Accordingly, a base station antenna is optimized to suit a radio wave environment of a site where the antenna is installed through a tilting or steering operation of the antenna so as to resolve a shadow area. Here, a steering angle of the antenna is determined in consideration of a sector orientation angle of a horizontal directional component of a beam, and a tilting angle of the antenna is determined in consideration of a tilting angle of a vertical directional component of the beam.

Meanwhile, there are cases in which a tilting angle and a steering angle of a previously installed antenna should be readjusted in response to a change in a wireless environment. For instance, there is a case in which a tilt of a support pole supporting an antenna is changed by an external force such as strong wind or in which a clamp coupling an antenna to a support pole is twisted to cause the tilting angle or the steering angle of the antenna to be misaligned. In such a case, there is a problem in that an operator should perform direction measurement and alignment work at a field site using an expensive measuring instrument or should climb up to a high position at which an antenna is installed and adjust the orienting direction of the antenna.

In addition, even if an operator manipulates an external controller without climbing up to a position where an antenna is installed and adjusts the orienting direction of the antenna, there is a problem in that the operator can only roughly estimate the orienting direction of the antenna, and therefore, the orienting direction of the antenna cannot be accurately readjusted.

Korean Patent Laid-Open Publication No. 10-2022-0079788 (Jun. 14, 2022) (hereinafter referred to as "the prior art") discloses "Method and System for Managing Orientation Direction of Mobile Communication Base Station Antenna" as a technology that enables an operator to accurately readjust the orienting direction of an antenna without climbing up to a position where the antenna is installed.

The prior art is an antenna management system including a direction control device for controlling an orienting direction of a mobile communication base station antenna. The direction control device includes a data reception unit that receives spatial direction information of an antenna device from a measurement device or video data capturing a foreground view toward which the antenna device is oriented, and a control unit that controls tilting and steering means of the antenna device such that the antenna device has a preset target spatial direction by using at least one of the spatial direction information and the video data.

However, since the prior art should be provided with a plurality of optical sensors to measure the orienting direction of the antenna device by using an incident angle of sunlight, a problem arises in that a cost increases.

### DISCLOSURE

### Technical Problem

The technical object of the present disclosure is to provide an apparatus and method for controlling the direction of an electronic device, which is configured such that an electronic device is automatically rotated to a target rotation angle when an operator inputs the target rotation angle of the electronic device to a controller, thereby reducing costs.

The technical objects of the present disclosure are not limited to the aforementioned technical object, and other technical objects, which are not mentioned above, may be clearly understood by those skilled in the art from the following descriptions.

### Technical Solution

In order to achieve the above-mentioned object, an apparatus for controlling the direction of an electronic device according to the present disclosure includes: a motor, a sensor and a control unit. The motor adjusts a rotation angle of the electronic device; the sensor senses a current rotation angle of the electronic device; and the control unit, when a target rotation angle is inputted, operates the motor to rotate the electronic device from the current rotation angle to the target rotation angle.

The electronic device may be installed on a support pole erected on a ground surface and is disposed spaced apart from the ground surface. The sensor may be a photo sensor that senses a current rotation angle of the electronic device with respect to the support pole.

The sensor may be an acceleration sensor or a gyro sensor that senses a current rotation angle of the electronic device with respect to the ground surface.

The apparatus for controlling the direction of an electronic device according to the present disclosure may further include a memory. The memory may store a set rotation angle of the electronic device. The control unit, when a target rotation angle of the electronic device is inputted, may compare the target rotation angle with the set rotation angle before operating the motor, may check whether the target rotation angle is within an allowable range of the set rotation angle, and may operate the motor if the target rotation angle is within the allowable range of the set rotation angle.

The control unit, when a target rotation angle of the electronic device is inputted, may determine, before operating the motor, to rotate a rotation shaft of the motor in one direction if the target rotation angle is larger than the current rotation angle and to rotate the rotation shaft of the motor in the other direction if the target rotation angle is smaller than the current rotation angle.

The control unit, when operating the motor, may operate the motor at a maximum speed if the difference between the current rotation angle and the target rotation angle is greater than a set angle. The control unit, when operating the motor, may operate the motor at a speed slower than the maximum speed if the difference between the current rotation angle and the target rotation angle is less than the set angle.

The control unit, after operating the motor, may store the current rotation angle as the set rotation angle in the memory if the rotation shaft of the motor stops rotating before the electronic device is rotated to the target rotation angle.

The control unit, after operating the motor, may stop the motor if the electronic device is rotated to the target rotation angle and may store the current rotation angle as the set rotation angle in the memory.

In order to achieve the above-mentioned object, a method for controlling the direction of an electronic device according to the present disclosure operates a motor that adjusts a rotation angle of the electronic device to control the direction of the electronic device. The method for controlling the direction of an electronic device according to the present disclosure includes a sensing step and a motor operating step. The sensing step senses a current rotation angle of the electronic device. The motor operating step, when a target rotation angle of the electronic device is inputted, operates the motor to rotate the electronic device from the current rotation angle to the target rotation angle.

A validity checking step may be performed before the motor operating step. The validity checking step, when a target rotation angle of the electronic device is inputted, may compare the target rotation angle with a set rotation angle of the electronic device stored in a memory and may check whether the target rotation angle is within an allowable range of the set rotation angle. The motor operating step may be performed when the target rotation angle is within the allowable range of the set rotation angle in the validity checking step.

A rotation direction determining step may be performed before the motor operating step. The rotation direction determining step, when a target rotation angle of the electronic device is inputted, may compare the target rotation angle with the current rotation angle and determine a rotation direction of the electronic device. The rotation direction determining step may determine to rotate the electronic device in one direction when the target rotation angle is larger than the current rotation angle. The rotation direction determining step may determine to rotate the electronic device in the other direction when the target rotation angle is smaller than the current rotation angle.

The motor operating step may include a motor speed controlling step. The motor speed controlling step may control an operation speed of the motor by comparing the difference between the current rotation angle and the target rotation angle with a set angle. The motor speed controlling step may operate the motor at a maximum speed if the difference between the current rotation angle and the target rotation angle is greater than the set angle. The motor speed controlling step may operate the motor at a speed slower than the maximum speed if the difference between the current rotation angle and the target rotation angle is less than the set angle.

A motor abnormality processing step may be performed after the motor operating step. The motor abnormality processing step may store the current rotation angle as the set rotation angle in the memory if a rotation shaft of the motor stops rotating before the electronic device is rotated to the target rotation angle.

A motor stopping step may be performed after the motor operating step. The motor stopping step may stop the motor if the electronic device is rotated to the target rotation angle and store the current rotation angle as the set rotation angle in the memory.

Specific details of other embodiments are included in the following detailed description and the accompanying drawings.

### Advantageous Effects

According to the apparatus and method for controlling the direction of an electronic device according to the present disclosure, effects are provided in that, when an operator inputs a target rotation angle of an electronic device to a controller, the electronic device is automatically rotated to the target rotation angle.

In addition, according to the apparatus and method for controlling the direction of an electronic device according to the present disclosure, effects are provided in that, when a rotation angle of an electronic device set using a photo sensor is lost, the direction of the electronic device may be controlled using an acceleration sensor or a gyro sensor cheaper than a photo sensor.

The effects of the present disclosure are not limited to the aforementioned effects, and other effects, which are not mentioned above, will be clearly understood by those skilled in the art from the claims.

### Brief Description of Drawings

FIG. 1 is a side view illustrating an antenna device including an apparatus for controlling the direction of an electronic device according to an embodiment of the present disclosure.
FIG. 2 is a view illustrating a state in which the tilting drive unit illustrated in FIG. 1 tilts an antenna.
FIG. 3 is a view illustrating another embodiment of FIG. 1.
FIG. 4 is a control block diagram illustrating the apparatus for controlling the direction of an antenna according to the embodiment of the present disclosure.
FIG. 5 is a flowchart according to a method for controlling the direction of an antenna according to an embodiment of the present disclosure.
FIG. 6 to FIG. 8 are specific flowcharts of a first embodiment according to a method using an acceleration sensor in the method for controlling the direction of an antenna according to the embodiment of the present disclosure.
FIG. 9 to FIG. 11 are specific flowcharts of a second embodiment according to the method using an acceleration sensor in the method for controlling the direction of an antenna according to the embodiment of the present disclosure.
FIG. 12 and FIG. 13 are specific flowcharts according to a method using a photo sensor in the method for controlling the direction of an antenna according to the embodiment of the present disclosure.

### <Description of Reference Numerals>

| | | | |
|---|---|---|---|
| 100: | Support pole | 200: | Electronic device |
| 450: | Motor | 472: | Sensor |
| 473: | Control unit | 474: | Memory |

### Mode for Disclosure

Hereinafter, an apparatus for controlling the direction of an electronic device and a method for controlling the direction of an electronic device according to embodiments of the present disclosure will be described with reference to drawings.

The electronic device may include an antenna and a lighting device, and may also include all electronic devices capable of adjusting direction. In the following description, an electronic device will be described as an antenna as an example, and an antenna may mean an electronic device.

Hereinafter, in the description, "tilting" refers to "rotation in an up-and-down direction with respect to a horizontally arranged rotation center", and a tilting operation may refer to adjustment of an up-and-down rotation angle of an antenna. Further, "steering" refers to "rotation in a left-and-right direction with respect to a vertically arranged rotation center", and a steering operation may refer to adjustment of a left-and-right rotation angle of an antenna.

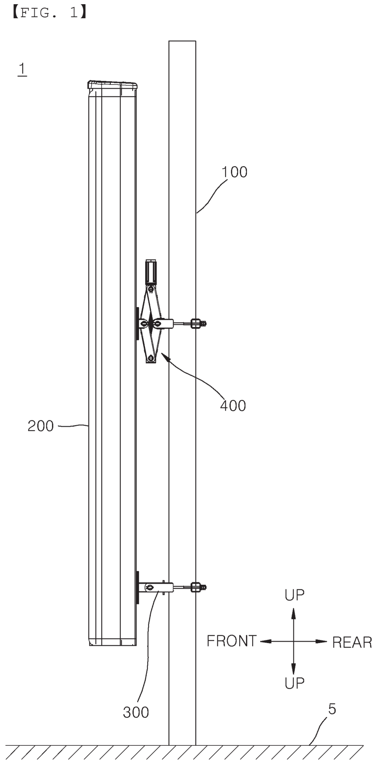

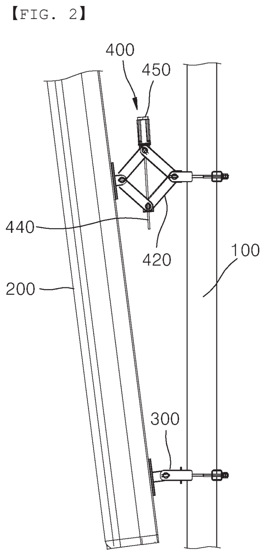

FIG. 1 is a side view illustrating an antenna device including an apparatus for controlling the direction of an electronic device according to an embodiment of the present disclosure, and FIG. 2 is a view illustrating a state in which the tilting drive unit illustrated in FIG. 1 tilts an antenna.

Referring to FIG. 1 and FIG. 2, an antenna device 1 according to an embodiment of the present disclosure may include a support pole 100, an antenna 200, a lower link unit 300, and a tilting drive unit 400.

When a vertical length of the antenna 200 is formed shorter than that of the present embodiment, the lower link unit 300 may not be provided.

That is to say, when a vertical length of the antenna 200 is formed to be relatively long, the lower link unit 300 and the tilting drive unit 400 may be provided. The tilting drive unit 400 may couple an upper portion of the antenna 200 to the support pole 100, and the lower link unit 300 may couple a lower portion of the antenna 200 to the support pole 100, so that the antenna 200 may be firmly coupled to the support pole 100 against an external force such as wind.

When a vertical length of the antenna 200 is formed to be relatively short, the lower link unit 300 may not be provided and only the tilting drive unit 400 may be provided, and the tilting drive unit 400 may couple the antenna 200 to the support pole 100.

The support pole 100 may be installed by being erected on a ground surface 5. The support pole 100 may be installed by being erected perpendicularly to the ground surface 5. The support pole 100 may be formed in a vertically elongate bar shape. The support pole 100 may be formed in a bar shape having a circular cross-section. The support pole 100 may support components of the antenna device according to the embodiment of the present disclosure, excluding the support pole 100 itself.

The antenna 200 may be installed on the support pole 100 and may be disposed spaced apart upward from the ground surface 5. The antenna 200 may be formed in a substantially rectangular-housing shape. A substrate mounted with antenna elements may be installed inside the antenna 200.

The lower link unit 300 may couple the lower portion of the antenna 200 to the support pole 100 such that the antenna 200 is rotatable in the up-and-down direction. The lower link unit 300 may be disposed below the tilting drive unit 400, and may couple the antenna 200 to the support pole 100 such that the antenna 200 is rotatable in the up-and-down direction.

The lower link unit 300 may include a first bracket coupled to the support pole 100 and disposed in front of the support pole 100, a second bracket coupled to a rear surface of the antenna 200 and disposed behind the antenna 200, and a rotation shaft horizontally disposed to be long in the left-and-right direction to rotatably couple the first and second brackets.

The tilting drive unit 400 may couple the antenna 200 to the support pole 100. The tilting drive unit 400 may tilt the antenna 200. The tilting drive unit 400 may couple the upper portion of the antenna 200 to the support pole 100. The tilting drive unit 400 may tilt the antenna 200 by rotating an upper portion of the antenna 200 about the rotation center of the lower link unit 300.

In other words, the tilting drive unit 400 may be a direction control device of the antenna 200 that adjusts an up-and-down rotation angle of the antenna 200 to thereby adjust the direction of the antenna 200.

The support pole 100 may be disposed to be spaced apart rearward from the antenna 200. The antenna 200 may be disposed to be spaced apart forward from the support pole 100. The lower link unit 300 may be disposed to be spaced apart downward from the tilting drive unit 400. The lower link unit 300 may connect the support pole 100 and the antenna 200. The tilting drive unit 400 may be disposed to be spaced apart upward from the lower link unit 300. The tilting drive unit 400 may connect the support pole 100 and the antenna 200.

The tilting drive unit 400 may include a plurality of tilting members 420, a screw bar 440, and a tilting motor 450.

However, in order to control an up-and-down rotation angle of the antenna 200, the structure of the tilting drive unit 400 may be modified in the variety of ways within a range including the tilting motor 450.

Both ends of the plurality of tilting members 420 may be rotatably coupled to each other through joint bars. The plurality of tilting members 420 may be rotatably coupled to each other, and may be formed into an approximately rhombus shape.

The screw bar 440 may be disposed to extend long vertically. A nut member may be coupled to a joint bar disposed lowermost among a plurality of joint bars that rotatably couple both ends of the plurality of tilting members 420, and the screw bar 440 may vertically penetrate through the nut member. A threaded portion that is fastened with a threaded portion formed on an inner circumferential surface of the nut member may be formed on an outer circumferential surface of the screw bar 440.

The tilting motor 450 may adjust the up-and-down rotation of the antenna 200 by adjusting an up-and-down rotation angle of the antenna 200 during driving. A rotation shaft of the tilting motor 450 may be coupled to the upper end of the screw bar 440. During driving of the tilting motor 450, the rotation shaft of the tilting motor 450 may be rotated, and the screw bar 440 may be rotated together with the rotation shaft of the tilting motor 450. When being rotated, the screw bar 440 may move the nut member upward or downward. Accordingly, as the plurality of tilting members 420 rotate, an up-and-down rotation angle of the antenna 200 may be adjusted.

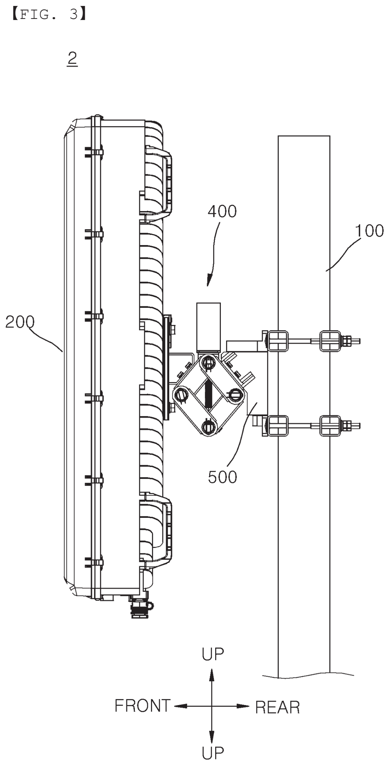

In the above description, the direction control device of the antenna 200 has been described as an example only as the tilting drive unit 400 for adjusting an up-and-down rotation angle of the antenna 200. However, the direction control device of the antenna 200 may further include a steering drive unit 500 (see FIG. 3) for adjusting a left-and-right rotation angle of the antenna 200.

This will be described below with reference to FIG. 3. For components the same as those shown in FIG. 1 and FIG. 2, the same reference numerals will be given, and detailed descriptions thereof will be omitted.

FIG. 3 is a view illustrating another embodiment of FIG. 1.

Referring to FIG. 3, an antenna device 2 according to another embodiment of the present disclosure may include a tilting drive unit 400 that adjusts an up-and-down rotation angle of an antenna 200, and a steering drive unit 500 that adjusts a left-and-right rotation angle of the antenna 200.

In this case, a direction control device of the antenna 200 according to the other embodiment of the present disclosure may control at least one of an up-and-down rotation angle and a left-and-right rotation angle of the antenna 200. To this end, the antenna device 2 according to the other embodiment of the present disclosure may include at least one of the tilting drive unit 400 and the steering drive unit 500.

A specific configuration of the steering drive unit 500 may be formed to be similar to a specific configuration of the tilting drive unit 400. However, specific structures of the tilting drive unit 400 and the steering drive unit 500 may be modified in a variety of ways within a range including a motor.

Namely, a motor for adjusting a left-and-right rotation angle of the antenna 200 may be included in the steering drive unit 500.

In other words, an apparatus and method for controlling the direction of an antenna according to the other embodiment of the present disclosure may adjust at least one of an up-and-down rotation angle and a left-and-right rotation angle of the antenna 200. That is to say, as a drive source for adjusting the direction of the antenna 200, at least one of the tilting motor 450 disposed in the tilting drive unit 400 and a motor disposed in the steering drive unit 500 may be included.

Hereinafter, the motor 450 may include at least one of the tilting motor 450 disposed in the tilting drive unit 400 for adjusting an up-and-down rotation angle of the antenna 200, and a steering motor, which is the motor disposed in the steering drive unit 500 for adjusting a left-and-right rotation angle of the antenna 200.

When the rotation shaft of the motor 450 is rotated in one direction, the antenna 200 may be rotated in the one direction, and when the rotation shaft of the motor 450 is rotated in the other direction, the antenna 200 may be rotated in the other direction.

For example, when the motor 450 is configured as a tilting motor for tilting the antenna 200, if the rotation shaft of the tilting motor is rotated in one direction, the antenna 200 may be rotated upward, and if the rotation shaft of the tilting motor is rotated in the other direction, the antenna 200 may be rotated downward. Furthermore, when the motor 450 is configured as a steering motor for steering the antenna 200, if the rotation shaft of the steering motor is rotated in one direction, the antenna 200 may be rotated leftward, and if the rotation shaft of the steering motor is rotated in the other direction, the antenna 200 may be rotated rightward.

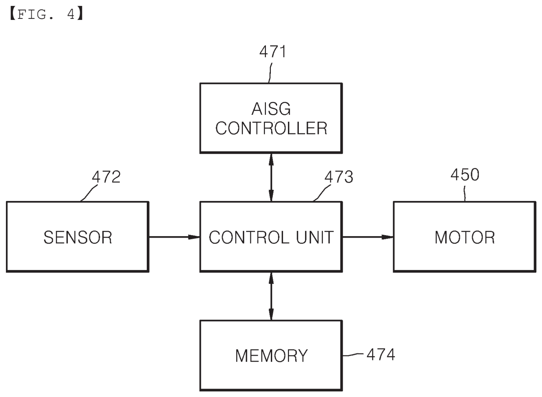

FIG. 4 is a control block diagram illustrating an apparatus for controlling the direction of an antenna according to an embodiment of the present disclosure.

Referring to FIG. 4, the apparatus for controlling the direction of an antenna according to the embodiment of the present disclosure may include a controller 471, a sensor 472, a control unit 473, and a memory (EEPROM) 474.

The controller 471 may be a component for operating the motor 450 by wireless communication or wired communication with the control unit 473. Since an electronic device is described by taking the antenna 200 as an example in the present embodiment, the controller 471 may be an Antenna Interface Standards Group (AISG) controller 471 that operates the motor 450 by wired communication with the control unit 473.

The AISG controller 471 may be a component for operating the motor 450 by being connected to the control unit 473 through a control cable. In other words, after an operator connects a port provided at one end of the control cable to the AISG controller 471 and connects a port provided at the other end of the control cable to the control unit 473, as the operator inputs, to the AISG controller 471, a target rotation angle of the antenna 200 for changing the direction of the antenna 200, it is possible to change the direction of the antenna 200 from the ground surface 5 without climbing the support pole 100.

The AISG controller 471 may provide a user interface for adjusting an orienting direction of the antenna 200 by operating the motor 450, and may serve as as an input unit through which a target rotation angle of the antenna 200 is inputted to the control unit 473 by a user.

The sensor 472 may be a sensor that senses a current rotation angle of the antenna 200. When the target rotation angle is inputted from the AISG controller 471, the control unit 473 may rotate the antenna 200 from the current rotation angle to the target rotation angle by operating the motor 450.

The control unit 473 and the memory 474 may be mounted on a printed circuit board disposed inside at least one of the tilting drive unit 400 and the steering drive unit.

The sensor 472 may include at least one of an acceleration sensor, a 3-axis gyroscope sensor (hereinafter, a gyro sensor) and a photo (photo interrupter) sensor. The acceleration sensor may be used when performing a tilting operation on the antenna 200, and the gyro sensor and the photo sensor may be used when performing at least one of a tilting operation and a steering operation on the antenna 200.

The acceleration sensor or the gyro sensor may sense a current rotation angle of the antenna 200 with respect to the ground surface 5. The control unit 473 may perform a tilting operation on the antenna 200 by using a measurement value of the acceleration sensor.

The acceleration sensor may be a 3-axis acceleration sensor having three axes (X axis, Y axis and Z axis) orthogonal to each other. The 3-axis acceleration sensor may measure acceleration values of the three axes.

For example, when the X-axis and the Y-axis of the 3-axis acceleration sensor are placed in parallel to the ground surface 5, an X-axis value and a Y-axis value may be measured as 0, and a Z-axis value may be measured as 1G (=9.8 m/s²). Further, when the Y-axis and the Z-axis of the 3-axis acceleration sensor are placed in parallel to the ground surface 5, a Y-axis value and a Z-axis value may be measured as 0, and an X-axis value may be measured as 1G.

The acceleration sensor may measure how much the sensor 472 is currently tilted with respect to the ground surface 5 using the three axes.

Since steering represents horizontal rotation with respect to the ground surface 5, an angle between the ground surface 5 and the sensor 472 does not change, and thus, a value of the sensor 472 may not change. Accordingly, in the case of steering, the gyro sensor capable of sensing a horizontal rotation may be used instead of the acceleration sensor.

The acceleration sensor is highly sensitive, and its measured value may vary even in a stopped state. Thus, when motor 450 operates, a measurement value may be inconsistent. In this case, a measured value of the acceleration sensor may be corrected using a Kalman filter (implemented in software).

After the angles of the support pole 100 and the antenna 200 are aligned parallel at a factory and the antenna 200 is first installed in the field, the angle of the acceleration sensor with respect to to the ground surface 5 should be set to 0° to determine the offset of the acceleration sensor. After the antenna 200 is installed to face a predetermined direction, the angle of the acceleration sensor with respect to ground surface 5 may be set to 0° in the memory 474.

For example, when the antenna 200 is first installed, +2° as the angle of the acceleration sensor with respect to the ground surface 5 may be set as 0° in the memory 474, and in this case, the control unit 473 may interpret +2° as 0° regardless of how the support pole 100 changes later.

The acceleration sensor or the gyro sensor may be installed on the motor 450.

When the operator inputs a target rotation angle of the antenna 200 into the AISG controller 471, the control unit 473 may repeat a set control logic until the difference between a current rotation angle of the antenna 200 sensed by the acceleration sensor and the target rotation angle is within 0.5°.

The photo sensor may sense a current rotation angle of the antenna 200 with respect to support pole 100. The control unit 473 may actuate the antenna 200 in at least one of a tilting operation or a steering operation using the measurement value of the photo sensor.

The photo sensor may include a photo interrupter. The photo interrupter may be composed of a light-emitting part (IR infrared) and a light-receiving part (photo TR). The photo interrupter may be an element that outputs a high value when light is sensed and outputs a low value when light is not sensed.

The photo interrupter may be connected to an external interrupt terminal of the control unit 473. In the photo sensor, an optical encoder may be located between the light-emitting part and the light-receiving part, and an optical encoder count (OEC) may increase when the rotation shaft of the motor 450 rotates.

Two external interrupts may be sensed for one protrusion of the encoder between the light-emitting part and the light-receiving part when the motor 450 is driven. For example, if the encoder has 18 protrusions for one rotation of the rotation shaft of the motor 450, 36 OECs may be generated during one rotation of the rotation shaft of the motor 450.

In order to measure a rotation angle of the rotation shaft of the motor 450 during driving of the motor 450, an optical encoder installed at a distal end of the rotation shaft of the motor 450 may pass between the light-emitting part and the light-receiving part while rotating.

The photo interrupter may output a low value when a blocked portion of the optical encoder passes between the light-emitting part and the light-receiving part, and may output a high value when an open portion of the optical encoder passes between the light-emitting part and the light-receiving part.

The control unit 473 may calculate OECs the number of which increases in cases where the output of the photo sensor is a rising edge that changes from a low value to a high value and a falling edge that changes from a high value to a low value, by using the external interrupt.

The control unit 473 may calculate a current rotation angle of the antenna 200 based on the increased number of OECs.

The OEC values for each minimum control unit section (for example, 0.5°) for controlling a rotation angle of the antenna 200 may be configured as a lookup table, and a target rotation angle of the antenna 200 desired by a user may be controlled.

The acceleration sensor is a sensor that measures movement due to the influence of gravitational acceleration and measures gravitational acceleration due to the weight of the rotated antenna 200. Thus, the acceleration sensor may measure only the tilting of the antenna 200 and may not measure the steering of the antenna 200.

Because the acceleration sensor cannot measure the steering of the antenna 200, the gyro sensor is used to measure the steering of the antenna 200. However, since the gyro sensor is a sensor that measures movement in relation to the speed of the antenna 200, a measurement error range occurs due to an external force (wind, external force action, etc.). Therefore, if the error range accumulates, an accurate position value cannot be measured. In this case, it may be preferable to set a reference for the zero point of the antenna 200 by using the photo sensor.

The motor 450 may be a DC motor, and may be controlled by a pulse width modulation (PWM) method. The control unit 473 may control a rotation speed of the rotation shaft of the motor 450 by generating pulses with a PWM duty ratio from 0 to 100%. The control unit 473 may control a rotation direction and a rotation speed of the rotation shaft of the motor 450 by applying a signal, in which an average voltage is varied by PWM pulses, to the motor 450.

The AISG controller 471 and the control unit 473 may communicate via AISG protocol and RS485 (Recommended Standard 485) serial communication. The AISG controller 471 may control and monitor the motor 450 by giving commands to the control unit 473 and responding to the control unit 473.

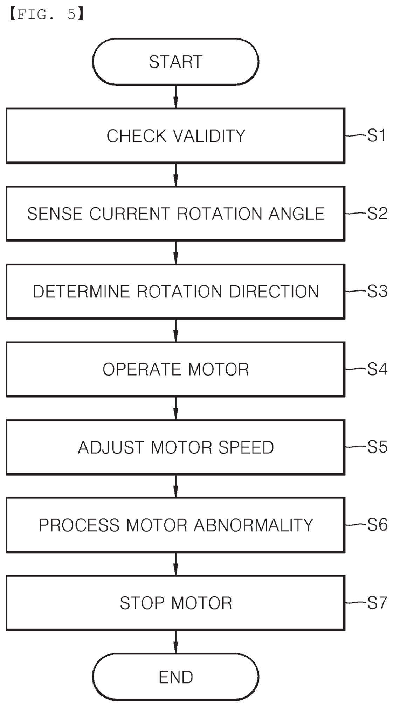

FIG. 5 is a flowchart according to a method for controlling the direction of an antenna according to an embodiment of the present disclosure. Hereinbelow, description will be made in connection with the operation of the antenna direction control device according to the embodiment of the present disclosure.

Referring to FIG. 4 and FIG. 5, the method for controlling the direction of an antenna according to the embodiment of the present disclosure may control the direction of the antenna 200 by operating the motor 450 that adjusts the rotation angle of the antenna 200.

That is to say, when the operator connects the AISG controller 471 to the motor 450 through a control cable and then inputs a target rotation angle, which is an angle for rotating the antenna 200 to a target position, to the AISG controller 471, the control unit 473 may start the control logic.

The method for controlling the direction of an antenna according to the embodiment of the present disclosure may include a validity check step S1, a sensing step S2, a rotation direction determination step S3, a motor operation step S4, a motor speed adjustment step S5, a motor abnormality processing step S6, and a motor stop step S7.

The validity check step S1, the sensing step S2, the rotation direction determination step S3, the motor operation step S4, the motor speed adjustment step S5, the motor abnormality processing step S6, and the motor stop step S7 may be control logics to be performed by the control unit 473.

The validity check step S1, the sensing step S2, the rotation direction determination step S3, the motor operation step S4, the motor speed adjustment step S5, the motor abnormality processing step S6, and the motor stop step S7 may be performed sequentially. The order of the validity check step S1 and the sensing step S2 may be changed, and the order of the motor speed adjustment step S5 and the motor abnormality processing step S6 may also be changed.

**In** the validity check step S1, when a target rotation angle of the antenna 200 is inputted to the control unit 473 from the AISG controller 471, the control unit 473 may compare the target rotation angle with a set rotation angle of the antenna 200 stored in the memory 474, and thereby, may check (determine) whether the target rotation angle is within the allowable range of the set rotation angle.

The set rotation angle may be an angle that is stored in the memory 474 by the control unit 473 as a current rotation angle of the antenna 200 sensed by the sensor 472 when the antenna 200 was previously installed in a predetermined direction, and may be a correct angle at which the antenna 200 should be oriented.

In the sensing step S2, the sensor 472 may sense a current rotation angle of the antenna 200.

In the rotation direction determination step S3, when a target rotation angle of the antenna 200 is inputted, the control unit 473 may compare the target rotation angle with the current rotation angle, and thereby, may determine a rotation direction of the antenna 200. In the rotation direction determination step S3, if the target rotation angle is larger than the current rotation angle, it may be determined to rotate the rotation shaft of the motor 450 in one direction. In the rotation direction determination step S3, if the target rotation angle is smaller than the current rotation angle, it may be determined to rotate the rotation shaft of the motor 450 in the other direction. The one direction and the other directions may be the up-and-down direction or the left-and-right direction.

The motor operation step S4 may be performed when the target rotation angle is within the allowable range of the set rotation angle in the validity check step S1.

In the motor operation step S4, when the target rotation angle of the antenna 200 is inputted, the control unit 473 may operate the motor 450 to rotate the antenna 200 from the current rotation angle to the target rotation angle.

The motor speed adjustment step S5 may be configured in the motor operation step S4. In the motor speed adjustment step S5, the control unit 473 may control the operation speed of the motor 450 by comparing the difference between the current rotation angle and the target rotation angle with the set angle. In the motor speed adjustment step S5, when the difference between the current rotation angle and the target rotation angle is equal to or larger than the set angle, the control unit 473 may operate the motor 450 at a maximum speed. In the motor speed adjustment step S5, when the difference between the current rotation angle and the target rotation angle is smaller than the set angle, the control unit 473 may operate the motor 450 at a speed slower than the maximum speed.

**In** the motor abnormality processing step S6, the control unit 473 may process an abnormality of the motor 450. The abnormality of the motor 450 may include a JAM, which is a state in which the rotation shaft of the motor 450 is not rotated even when the control unit 473 inputs a control command or power to the motor 450 to rotate the rotation shaft of the motor 450. In the motor abnormality processing step S6, if the rotation shaft of the motor 450 stops rotating before the antenna 200 is rotated to the target rotation angle, the control unit 473 may store the current rotation angle as the set rotation angle in the memory 474. Through this, the control unit 473 may quickly perform a subsequent control logic for adjusting the rotation angle of the antenna 200 to the target rotation angle.

In the motor stop step S7, the control unit 473 may stop the motor 450 when the antenna 200 is rotated to the target rotation angle. In the motor stop step S7, when the antenna 200 is rotated to the target rotation angle, the current rotation angle may be stored in the memory 474 as the set rotation angle.

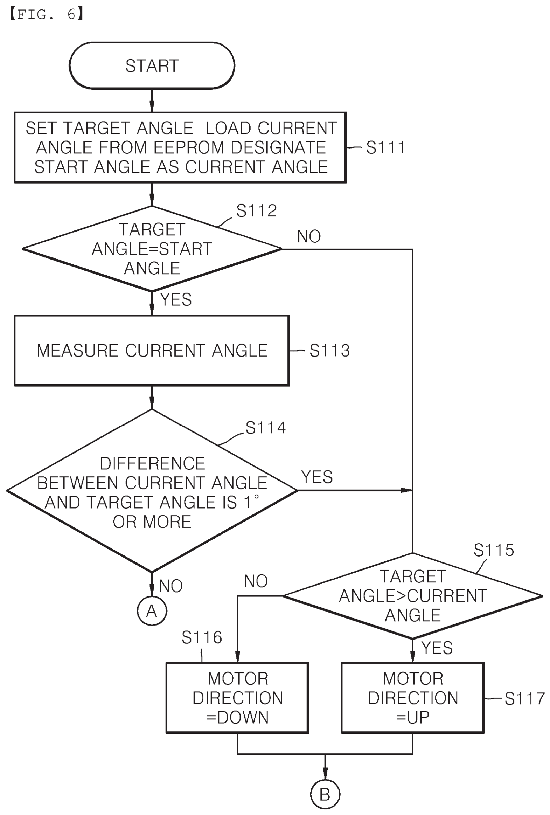

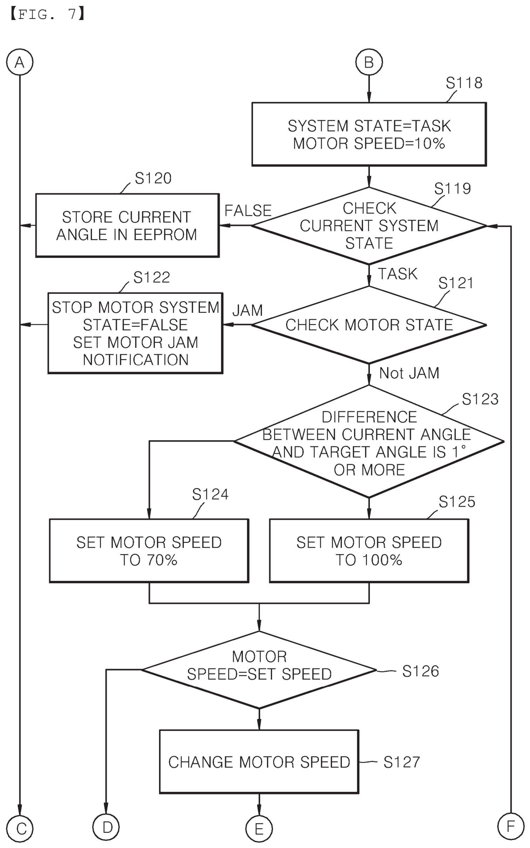

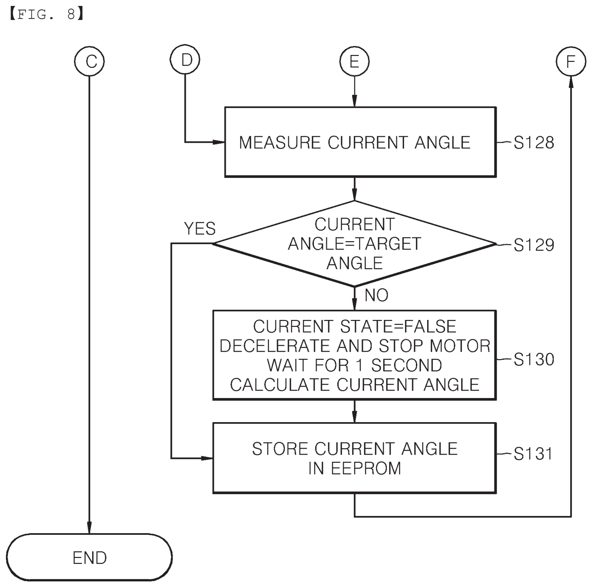

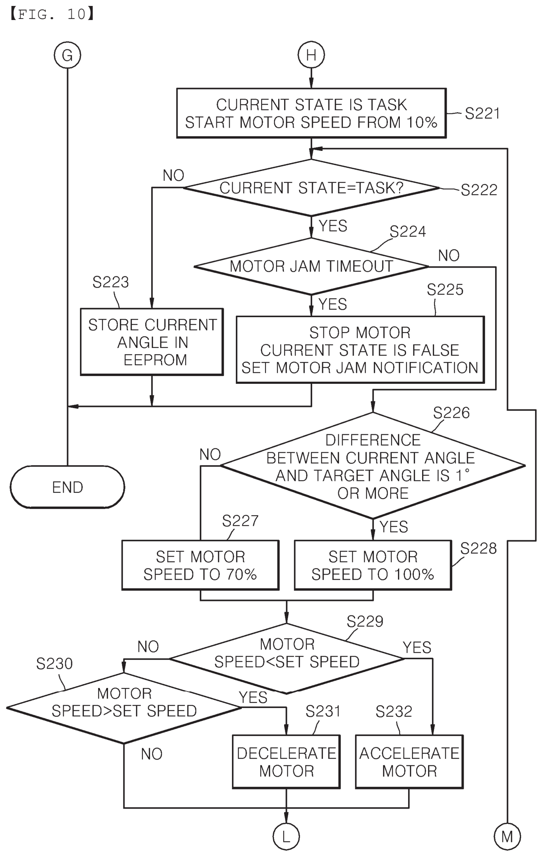

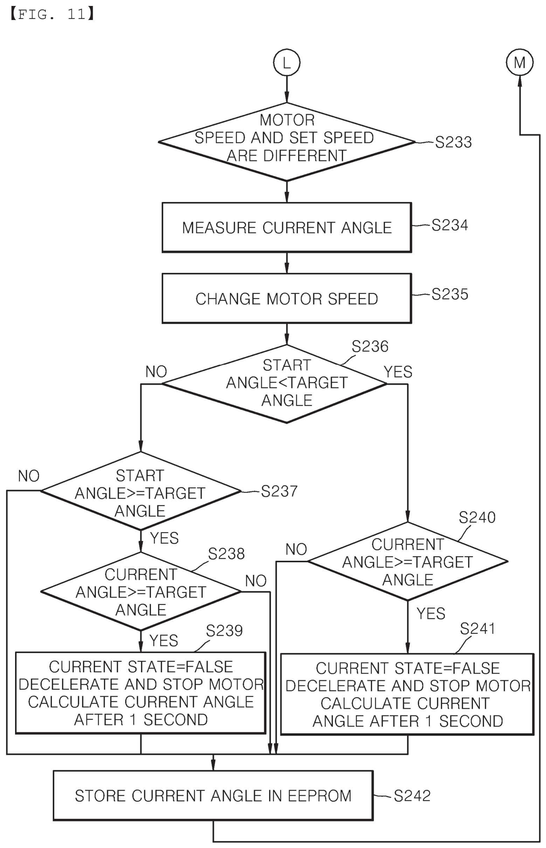

Hereinafter, the method for controlling the direction of an antenna according to the embodiment of the present disclosure will be described in more detail with reference to FIG. 6 to FIG. 13. Hereinbelow, a current rotation angle of the antenna 200 will be referred to by being abbreviated as a current angle of the antenna 200, a target rotation angle of the antenna 200 will be referred to by being abbreviated as a target angle of the antenna 200, and a set rotation angle of the antenna 200 will be referred to by being abbreviated as a set angle of the antenna 200.

FIG. 6 to FIG. 8 are specific flowcharts of a first embodiment according to a method using an acceleration sensor in the method for controlling the direction of an antenna according to the embodiment of the present disclosure.

Referring to FIG. 6 to FIG. 8, in the first embodiment according to a method using an acceleration sensor in the method for controlling the direction of an antenna according to the embodiment of the present disclosure, in a step S111, when an operator inputs a target angle to the AISG controller 471, the control unit 473 may set the target angle, may load a current angle (a previously set angle) stored in the memory (EEPROM) 474, and may designate a start angle as the current angle. The current angle stored in the memory 474 may be an angle that the control unit 473 stores in the memory 474 as a current angle of the antenna 200 sensed by the sensor 472 when the angle of the antenna 200 was previously correctly adjusted. In other words, the control unit 473 may load a set angle of the antenna 200 previously stored in the memory 474 and designate it as a start angle.

In a step S112, the control unit 473 may determine whether the target angle is the same as the start angle. Namely, the control unit 473 does not need to adjust the angle of the antenna 200 if the target angle is the same as the start angle, but may check whether an abnormality is present in consideration of a case where the angle of the antenna 200 is misaligned due to an external factor. For example, in a state in which the angle of the antenna 200 was previously set to 5°, if the operator inputs the target angle as 5°, there is no need to adjust the angle of the antenna 200. Therefore, when the target angle is inputted, the control unit 473 performs a validity check to check whether the target angle is within the range of the set angle.

As a result of the determination in the step S112, if the target angle is the same as the start angle, in a step S113, the control unit 473 may measure a current angle through the sensor 472.

In a step S114, the control unit 473 may determine whether the difference between the current angle and the target angle is 1° or more. Since the acceleration sensor operates substantially sensitively, the sensing value of the acceleration sensor may have a certain degree of error. Here, 1° may be an angle that is set in the memory 474, and may be changed to various angles as needed and set in the memory 474.

As a result of the determination in the step S114, if the difference between the current angle and the target angle is not 1° or more, the control unit 473 may determine that the antenna 200 is not misaligned from a previously installed orienting direction and terminate a control logic system. That is to say, when the difference between the current angle and the target angle is not 1° or more, the control unit 473 may determine in consideration of the error of the acceleration sensor that the antenna 200 is at a previously adjusted correct angle, and may terminate the control logic system.

In addition, as a result of the determination in the step S114, if the difference between the current angle and the target angle is 1° or more, the control unit 473 may determine that the antenna 200 is not at a correct angle due to an external impact or wind, etc., and may determine that it is necessary to adjust the angle of the antenna 200 to the target angle. Accordingly, if the difference between the current angle and the target angle is 1° or more as a result of the determination in the step S114, in a step S115, the control unit 473 may determine whether the target angle is larger than the current angle. If the target angle is not the same as the start angle as a result of the determination in the step S112, in the step S115, the control unit 473 may determine whether the target angle is larger than the current angle.

As a result of the determination in the step S115, if the target angle is not larger than the current angle, in a step S116, the control unit 473 may determine a rotation direction of the rotation shaft of the motor 450 to be a down direction as one direction. The down direction may mean that the rotation angle of the antenna 200 is gradually adjusted such that the front surface of the antenna 200 faces downward.

In addition, as a result of the determination in the step S115, if the target angle is larger than the current angle, in a step S117, the control unit 473 may determine a rotation direction of the rotation shaft of the motor 450 to be an up direction as the other direction. The up direction may mean that the rotation angle of the antenna 200 is gradually adjusted such that the front surface of the antenna 200 faces upward.

After determining a rotation direction of the rotation shaft of the motor 450, in a step S118, the control unit 473 may designate the current state of the control logic system as TASK, and may accelerate the rotation speed of the rotation shaft of the motor 450 starting from 10% of the maximum speed. The control unit 473 may repeat a control logic of operating the motor 450 until the direction of the antenna 200 is adjusted to the target angle.

In a step S119, the control unit 473 may check the state of the current control logic system while the control logic is repeated.

As a result of the check in the step S119, if the direction of the antenna 200 is adjusted to the target angle, the control unit 473 may stop the motor 450 and set the state of the control logic system to FALSE to perform a step S120.

In the step S120, the control unit 473 may store the current angle of the antenna 200 sensed by the sensor 472 in the memory 474 and terminate the control logic system.

As a result of the check in the step S119, if the direction of the antenna 200 is not adjusted to the target angle, the control unit 473 may continue the operation of the motor 450 and maintain the state of the control logic system as TASK to perform a step S121.

In the step S121, the control unit 473 may check the state of the motor 450. The state of the motor 450 may include a JAM state in which the rotation shaft of the motor 450 is not rotated even when a control command or power is inputted to the motor 450. The JAM state of the motor 450 may be a case where there is no change in the angle of the antenna 200 for a set period of time or an amount of change is equal to or less than a set range. For example, when the angle of the antenna 200 is the same for 5 seconds, the control unit 473 may determine that the motor 450 is in a JAM state.

As a result of the check in the step S121, if the motor 450 is in a JAM state, the control unit 473 may perform a step S122.

In the step S122, the control unit 473 may stop the motor 450, may designate the state of the control logic system as FALSE, and may notify the operator that the motor 450 is in a JAM state. The control unit 473 may notify the operator that the motor 450 is in a JAM state through the AISG controller 471, and may set a JAM notification in a message to be transmitted to the AISG controller 471.

As a result of the check in the step S121, if the motor 450 is not in a JAM state, the control unit 473 may perform a step S123.

In the step S123, the control unit 473 may determine whether the difference between the current angle and the target angle is 1° or more. Here, 1° may be an angle that is set in the memory 474, and may be changed to various angles as needed and set in the memory 474.

As a result of the determination in the step S123, if the difference between the current angle and the target angle is not 1° or more, in a step S124, the control unit 473 may set the rotation speed of the rotation shaft of the motor 450 to be accelerated to a rotation speed of 70% of the maximum rotation speed. The rotation speed of 70% may be a rotation speed stored in the memory 474, and may be changed to various rotation speeds as needed.

In addition, as a result of the determination in the step S123, if the difference between the current angle and the target angle is 1° or more, in a step S125, the control unit 473 may set the rotation speed of the rotation shaft of the motor 450 to be accelerated to a rotation speed of 100% of the maximum rotation speed. The rotation speed of 100% may be a rotation speed stored in the memory 474, and may be changed to various rotation speeds as needed.

In a step S126, the control unit 473 may determine whether the rotation speed of the rotation shaft of the motor 450 is close to the maximum acceleration speed set in the step S124 or the step S125.

As a result of the determination in the step S126, if the rotation speed of the rotation shaft of the motor 450 is close to the maximum acceleration speed, in a step S127, the control unit 473 may change the rotation speed of the rotation shaft of the motor 450 to be gradually decelerated.

In addition, as a result of the determination in the step S126, if the rotation speed of the rotation shaft of the motor 450 is not close to the maximum acceleration speed, in a step S128, the control unit 473 may measure a current angle of the antenna 200 to be sensed by the sensor 472. The control unit 473 may continuously measure a current angle of the antenna 200 to be sensed by the sensor 472 while repeating the control logic.

In a step S129, the control unit 473 may determine whether the current angle of the antenna 200 measured in the step S128 has almost reached the target angle.

As a result of the determination in the step S129, if the current angle has almost reached the target angle, in a step S130, the control unit 473 may designate a current state of the control logic system as FALSE, may decelerate and stop the motor 450, and may calculate a current angle of the antenna 200 to be sensed by the sensor 472 after waiting for 1 second after the motor 450 is stopped. The reason for waiting for 1 second after the motor 450 is stopped is to accurately measure the current angle of the antenna 200 after the acceleration sensor is stabilized to a certain extent. 1 second waiting time after the motor 450 is stopped may be a set time stored in the memory 474, and may be changed and set in various ways as needed.

After the step S130, in a step S131, the control unit 473 may store the current angle of the antenna 200 sensed by the sensor 472 in the memory 474.

In addition, as a result of the determination in the step S129, if the current angle has not yet almost reached the target angle, in the step S131, the control unit 473 may store the current angle of the antenna 200 sensed by the sensor 472 in the memory 474. This is to store a current angle of the antenna 200 sensed by the sensor 472 in the memory 474 each time so as to be aware of a current angle even in a case where the operation of the control logic system is stopped due to a power-off or other reasons.

After the step S131, the control unit 473 may return the control logic system to the step S119.

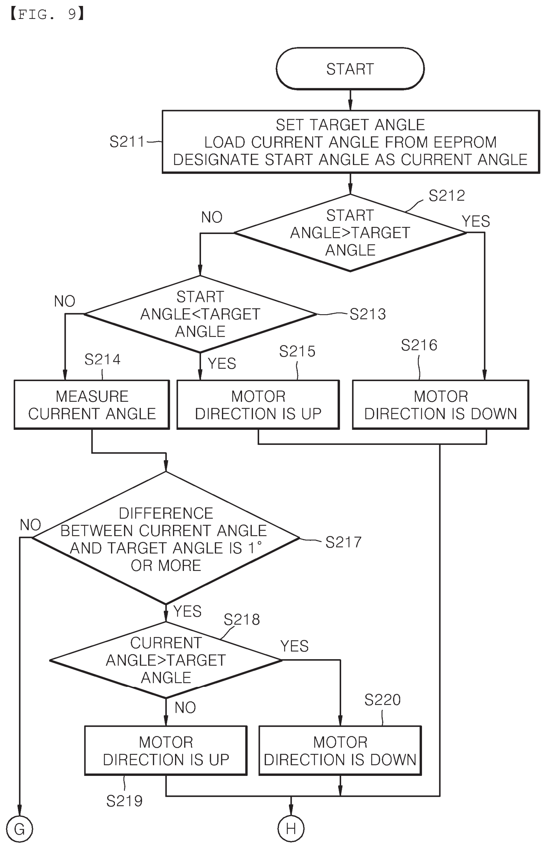

FIG. 9 to FIG. 11 are specific flowcharts of a second embodiment according to the method using an acceleration sensor in the method for controlling the direction of an antenna according to the embodiment of the present disclosure.

Referring to FIG. 9 to FIG. 11, in the second embodiment according to a method using an acceleration sensor in the method for controlling the direction of an antenna according to the embodiment of the present disclosure, in a step S211, when an operator inputs a target angle to the AISG controller 471, the control unit 473 may set the target angle, may load a current angle (a previously set angle) stored in the memory (EEPROM) 474, and may designate a start angle as the current angle. The current angle stored in the memory 474 may be an angle that the control unit 473 stores in the memory 474 as a current angle of the antenna 200 sensed by the sensor 472 when the angle of the antenna 200 was previously correctly adjusted. In other words, the control unit 473 may load a set angle of the antenna 200 previously stored in the memory 474 and designate it as a start angle.

In a step S212, the control unit 473 may determine whether the start angle is larger than the target angle. Namely, the control unit 473 does not need to adjust the angle of the antenna 200 if the start angle is the same as the target angle, but may check whether an abnormality is present in consideration of a case where the angle of the antenna 200 is misaligned due to an external factor. For example, in a state in which the angle of the antenna 200 was previously set to 5°, if the operator inputs the target angle as 5°, there is no need to adjust the angle of the antenna 200. Therefore, when the target angle is inputted, the control unit 473 performs a validity check to check whether the target angle is within the range of the set angle.

If the start angle is not larger than the target angle as a result of the determination in the step S212, in a step S213, the control unit 473 may determine whether the start angle is smaller than the target angle.

As a result of the determination in the step S213, if the start angle is not smaller than the target angle, in a step S214, the control unit 473 may measure a current angle through the sensor 472.

In addition, as a result of the determination in the step S213, if the start angle is smaller than the target angle, in a step S215, the control unit 473 may determine a rotation direction of the rotation shaft of the motor 450 to be an up direction as one direction. The up direction may mean that the rotation angle of the antenna 200 is gradually adjusted such that the front surface of the antenna 200 faces upward.

In addition, as a result of the determination in the step S212, if the start angle is larger than the target angle, in a step S216, the control unit 473 may determine a rotation direction of the rotation shaft of the motor 450 to be a down direction as the other direction. The down direction may mean that the rotation angle of the antenna 200 is gradually adjusted such that the front surface of the antenna 200 faces downward.

In a step S217, the control unit 473 may determine whether the difference between the current angle and the target angle is 1° or more. Since the acceleration sensor operates substantially sensitively, the sensing value of the acceleration sensor may have a certain degree of error. Here, 1° may be an angle that is set in the memory 474, and may be changed to various angles as needed and set in the memory 474.

As a result of the determination in the step S217, if the difference between the current angle and the target angle is not 1° or more, the control unit 473 may determine that the antenna 200 is not misaligned from a previously installed orienting direction and terminate a control logic system. In addition, when the difference between the current angle and the target angle is not 1° or more, the control unit 473 may determine in consideration of the error of the acceleration sensor that the antenna 200 is at a previously adjusted correct angle, and may terminate the control logic system.

In addition, as a result of the determination in the step S217, if the difference between the current angle and the target angle is 1° or more, the control unit 473 may determine that the antenna 200 is not at a correct angle due to an external impact or wind, etc., and may determine that it is necessary to adjust the angle of the antenna 200 to the target angle. Accordingly, if the difference between the current angle and the target angle is 1° or more as a result of the determination in the step S217, in a step S218, the control unit 473 may determine whether the current angle is larger than the target angle.

As a result of the determination in the step S218, if the current angle is not larger than the target angle, in a step S219, the control unit 473 may determine a rotation direction of the rotation shaft of the motor 450 to be the up direction as the one direction.

In addition, as a result of the determination in the step S218, if the current angle is larger than the target angle, in a step S220, the control unit 473 may determine a rotation direction of the rotation shaft of the motor 450 to be the down direction as the other direction.

After determining a rotation direction of the rotation shaft of the motor 450, in a step S221, the control unit 473 may designate the current state of the control logic system as TASK, and may accelerate the rotation speed of the rotation shaft of the motor 450 starting from 10% of the maximum speed. The control unit 473 may repeat a control logic of operating the motor 450 until the direction of the antenna 200 is adjusted to the target angle.

In a step S222, the control unit 473 may check the current state of the control logic system while the control logic is repeated. That is, in the step S222, the control unit 473 may determine whether a current state of the control logic system is TASK.

As a result of the determination in the step S222, if a current state of the control logic system is not TASK, in a step S223, the control unit 473 may store a current angle of the antenna 200 sensed by the sensor 472 in the memory 474 and terminate the control logic system.

As a result of the determination in the step S222, if a current state of the control logic system is TASK, in a step S224, the control unit 473 may check the state of the motor 450. The state of the motor 450 may include a JAM state in which the rotation shaft of the motor 450 is not rotated even when a control command or power is inputted to the motor 450. In other words, in the step S224, the control unit 473 may determine whether the motor 450 is in a JAM timeout state. For example, when there is no change in the angle of the antenna 200 for a set period of time or an amount of change is equal to or less than a set range, the control unit 473 may determine that the motor 450 is in a JAM timeout state. When the motor 450 is in a JAM timeout state, the control unit 473 may determine that the motor 450 is in a JAM state. For example, when the angle of the antenna 200 is the same for 5 seconds, the control unit 473 may determine that the motor 450 is in a JAM state.

As a result of the determination in the step S224, if the motor 450 is in a JAM timeout state, in a step S225, the control unit 473 may stop the motor 450, may designate the state of the control logic system as FALSE, and may notify the operator that the motor 450 is in a JAM state. The control unit 473 may notify the operator that the motor 450 is in a JAM state through the AISG controller 471, and may set a JAM notification in a message to be transmitted to the AISG controller 471.

As a result of the determination in the step S224, if the motor 450 is not in a JAM timeout state, in a step S226, the control unit 473 may determine whether the difference between the current angle and the target angle is 1° or more. Here, 1° may be an angle that is set in the memory 474, and may be changed to various angles as needed and set in the memory 474.

As a result of the determination in the step S226, if the difference between the current angle and the target angle is not 1° or more, in a step S227, the control unit 473 may set the rotation speed of the rotation shaft of the motor 450 to be accelerated to a rotation speed of 70% of a maximum rotation speed. The rotation speed of 70% may be a rotation speed stored in the memory 474, and may be changed to be set as various rotation speeds as needed.

In addition, as a result of the determination in the step S226, if the difference between the current angle and the target angle is 1° or more, in a step S228, the control unit 473 may set the rotation speed of the rotation shaft of the motor 450 to be accelerated to a rotation speed of 100% of the maximum rotation speed. The rotation speed of 100% may be a rotation speed stored in the memory 474, and may be changed to be set as various rotation speeds as needed.

In a step S229, the control unit 473 may determine whether the rotation speed of the rotation shaft of the motor 450 is less than the maximum acceleration speed set in the step S227 or the step S228.

As a result of the determination in the step S229, if the rotation speed of the rotation shaft of the motor 450 is not less than the maximum acceleration speed, in a step S230, the control unit 473 may determine whether the rotation speed of the rotation shaft of the motor 450 is greater than the maximum acceleration speed set in the step S227 or the step S228.

As a result of the determination in the step S230, if the rotation speed of the rotation shaft of the motor 450 is greater than the maximum acceleration speed set in the step S227 or the step S228, in a step S231, the control unit 473 may change the rotation speed of the rotation shaft of the motor 450 to be gradually decelerated.

In addition, as a result of the determination in the step S229, if the rotation speed of the rotation shaft of the motor 450 is less than the maximum acceleration speed, in a step S232, the control unit 473 may change the rotation speed of the rotation shaft of the motor 450 to be gradually accelerated.

In a step S233, the control unit 473 may determine whether the rotation speed of the rotation shaft of the motor 450 and the maximum acceleration speed set in the step S227 or the step S228 are different from each other.

As a result of the determination in the step S233, if the rotation speed of the rotation shaft of the motor 450 and the maximum acceleration speed set in the step S227 or the step S228 are different from each other, in a step S234, the control unit 473 may measure a current angle of the antenna 200 to be sensed by the sensor 472. The control unit 473 may continuously measure a current angle of the antenna 200 to be sensed by the sensor 472 while repeating the control logic.

In addition, as a result of the determination in the step S233, if the rotation speed of the rotation shaft of the motor 450 and the maximum acceleration speed set in the step S227 or the step S228 are different from each other, in a step S235, the control unit 473 may change the rotation speed of the rotation shaft of the motor 450 to be gradually decelerated.

In a step S236, the control unit 473 may determine whether the start angle is smaller than the target angle.

If the start angle is not smaller than the target angle as a result of the determination in the step S236, in a step S237, the control unit 473 may determine whether the start angle is equal to or larger than the target angle.

As a result of the determination in the step S237, if the start angle is equal to or larger than the target angle, in a step S238, the control unit 473 may determine whether the current angle measured in the step S234 is equal to or larger than the target angle.

As a result of the determination in the step S238, if the current angle is equal to or larger than the target angle, in a step S239, the control unit 473 may designate a current state of the control logic system as FALSE, may decelerate and stop the motor 450, and may calculate a current angle of the antenna 200 to be sensed by the sensor 472 after waiting for 1 second after the motor 450 is stopped. The reason for waiting for 1 second after the motor 450 is stopped is to accurately measure the current angle of the antenna 200 after the acceleration sensor is stabilized to a certain extent. 1 second waiting time after the motor 450 is stopped may be a set time stored in the memory 474, and may be changed and set in various ways as needed.

As a result of the determination in the step S236, if the start angle is smaller than the target angle, in a step S240, the control unit 473 may determine whether the current angle measured in the step S234 is equal to or larger than the target angle.

As a result of the determination in the step S240, if the current angle is equal to or larger than the target angle, in a step S241, the control unit 473 may designate a current state of the control logic system as FALSE, may decelerate and stop the motor 450, and may calculate a current angle of the antenna 200 to be sensed by the sensor 472 after waiting for 1 second after the motor 450 is stopped. The reason for waiting for 1 second after the motor 450 is stopped is to accurately measure the current angle of the antenna 200 after the acceleration sensor is stabilized to a certain extent. 1 second waiting time after the motor 450 is stopped may be a set time stored in the memory 474, and may be changed and set in various ways as needed.

Meanwhile, if the start angle is smaller than the target angle as a result of the determination in the step S237, if the current angle is smaller than the target angle as a result of the determination in the step S238, if the current angle is smaller than the target angle as a result of the determination in the step S240, or after performing the step S239 or the step S241, in a step S242, the control unit 473 may store a current angle of the antenna 200 sensed by the sensor 472 in the memory 474.

After the step S242, the control unit 473 may return the control logic system to the step S222.

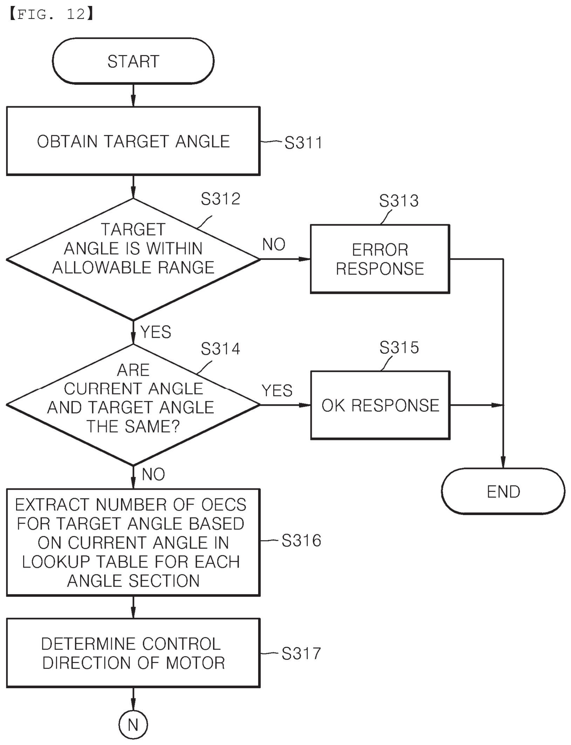

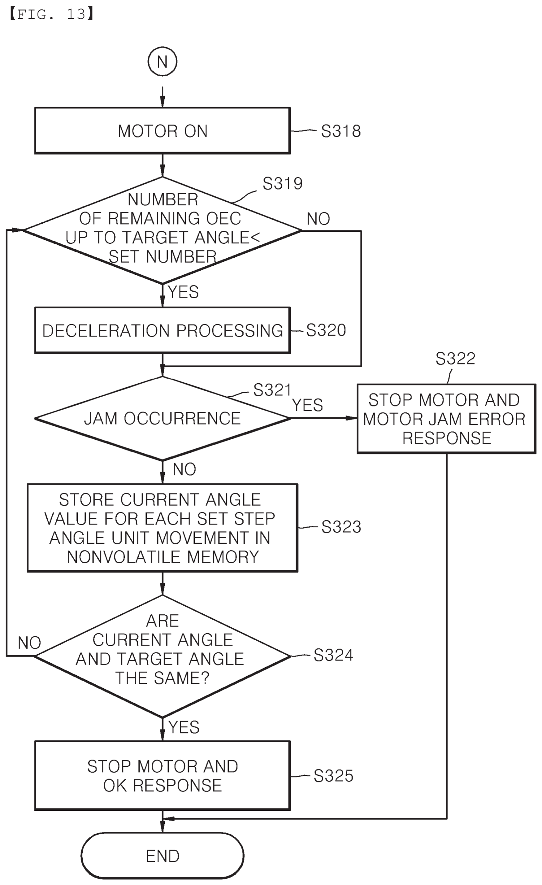

FIG. 12 and FIG. 13 are specific flowcharts according to a method using a photo sensor in the method for controlling the direction of an antenna according to the embodiment of the present disclosure.

Referring to FIG. 12 and FIG. 13, in the method using a photo sensor in the method for controlling the direction of an antenna according to the embodiment of the present disclosure, in a step S311, when the operator inputs a target angle to the AISG controller 471, the control unit 473 may obtain the target angle. The target angle may include at least one of an angle for tilting the antenna 200 and an angle for steering the antenna 200.

In a step S312, the control unit 473 may determine whether the target angle is within an allowable range. Namely, in the step S312, the control unit 473 may determine whether the target angle is within a set angle range stored in the memory 474. This is because, when the antenna 200 was previously installed correctly, the operator should input an angle of the antenna 200 as the target angle to the AISG controller 471, but, if the operator does not know the target angle, the target angle inputted to the AISG controller 471 may be an angle that is out of the allowable range. Therefore, in order to operate a control logic system only when the target angle is within the allowable range, in the step S312, the control unit 473 determines whether the target angle is within the allowable range.

As a result of the determination in the step S312, if the target angle does not exist within the allowable range, in a step S313, the control unit 473 may output an error response and terminate the operation of the control logic system. That is to say, the control unit 473 may notify the operator through the AISG controller 471 that the target angle is not within the allowable range, and may set an error notification in a message to be transmitted to the AISG controller 471.

As a result of the determination in the step S312, if the target angle is within the allowable range, in a step S314, the control unit 473 may determine whether a current angle of the antenna 200 sensed by the sensor 472 and the target angle are the same. In other words, the control unit 473 does not need to adjust the angle of the antenna 200 if the current angle and the target angle are the same, but may check whether an abnormality is present in consideration of a case where the angle of the antenna 200 is misaligned due to an external factor. For example, in a state in which the angle of the antenna 200 was previously set to 5°, if the operator inputs the target angle as 5°, there is no need to adjust the angle of the antenna 200. Therefore, when the target angle is inputted, the control unit 473 performs a validity check to check whether the current angle and the target angle are the same.

As a result of the determination in the step S314, if the current angle and the target angle are the same, in a step S315, the control unit 473 may output an OK response and terminate the operation of the control logic system. That is, if the current angle and the target angle are the same, the control unit 473 may determine that there is no need to adjust the angle of the antenna 200, and may notify the operator with the OK response through the AISG controller 471 that there is no need to adjust the angle of the antenna 200.

In addition, as a result of the determination in the step S314, if the current angle and the target angle are not the same, in a step S316, the control unit 473 may extract the number of optic encoder counts (OECs) for the target angle based on the current angle from a lookup table for each angle section stored in the memory 474.

In a step S317, the control unit 473 may compare the current angle and the target angle and thereby determine a control direction of the motor 450. In other words, in the step S317, the control unit 473 may compare the current angle and the target angle and thereby determine a rotation direction of the rotation shaft of the motor 450. When controlling tilting, a control direction may be a down direction or an up direction, and when controlling steering, a control direction may be a left direction or a right direction.

In a step S318, the control unit 473 may operate (turn on) the motor 450. A current OEC value may be increased in an External Interrupt Service Routine (ISR) when the rotation shaft of the motor 450 is rotated. A timer may be used to gradually accelerate the motor 450 at set time intervals. The operation of the motor 450 may be performed by PWM control. An inrush current may be reduced by gradually accelerating the motor 450.

In a step S319, the control unit 473 may determine whether the number of remaining OECs up to the target angle is less than a set number set in the memory 474. The set number may be an OEC set number that serves as a reference for deceleration of the motor 450. For example, the control unit 473 may decelerate the rotation speed of the rotation shaft of the motor 450 from a time point at which set N OECs remain in the memory 474.

As a result of the determination in the step S319, if the number of remaining OECs up to the target angle is less than the set number, in a step S320, the control unit 473 may decelerate the rotation speed of the rotation shaft of the motor 450. Through this, the rotation angle of the antenna 200 may be precisely adjusted.

As a result of the determination in the step S319, if the number of remaining OECs up to the target angle is not less than the set number, in a step S321, the control unit 473 may determine whether a JAM of the motor 450 has occurred. JAM occurrence of the motor 450 may be determined by checking an OEC value at predetermined time intervals set in the memory 474, and determining a JAM when the OEC value does not increase under a PWM duty ratio equal to or greater than a PWM duty ratio set in the memory 474.

As a result of the determination in the step S321, if a JAM has occurred in the motor 450, in a step S322, the control unit 473 may stop the motor 450, may output a motor JAM error response to the AISG controller 471 to notify the operator, and may terminate the operation of the control logic system.

In addition, as a result of the determination in the step S321, if a JAM has not occurred in the motor 450, in a step S323, the control unit 473 may store a current angle value of the antenna 200 sensed by the sensor 472 in the nonvolatile memory 474 for each step angle unit movement set in the memory 474. The step angle may be set in the memory 474 to 0.1° to 0.5°, and may be changed to be set as various step angles as needed.

In a step S324, the control unit 473 may determine whether the current angle and the target angle are the same. The control unit 473 may calculate the current angle based on a current OEC value that is increasing.

As a result of the determination in the step S324, if the current angle and the target angle are not the same, the control unit 473 may return the control logic system to the step S319.

As a result of the determination in the step S324, if the current angle and the target angle are the same, in a step S325, the control unit 473 may determine that the target angle adjustment of the antenna 200 is completed, may stop the motor 450, may output an OK response to the AISG controller 471 to notify the operator, and may terminate the operation of the control logic system.

As described above, according to apparatus and method for controlling the direction of an antenna according to the embodiments of the present disclosure, when the operator inputs a target rotation angle of the electronic device 200 to the controller 471, the electronic device 200 may be automatically rotated to the target rotation angle.

In addition, according to apparatus and method for controlling the direction of an electronic device according to the embodiments of the present disclosure, when the rotation angle of the electronic device 200 set using a photo sensor is lost, the direction of the electronic device 200 may be controlled using an acceleration sensor or a gyro sensor that is cheaper than the photo sensor.

A person skilled in the art may understand that the present disclosure may be carried out in other specific forms without changing the technical spirit or the essential characteristics of the present disclosure. Therefore, it should be understood that the above-described embodiments are illustrative in all aspects and do not limit the present disclosure. The scope of the present disclosure is represented by the claims to be described below rather than the detailed description, and it should be interpreted that the meaning and scope of the claims and all the changes or modified forms derived from the equivalent concepts thereto fall within the scope of the present disclosure.

### Industrial Applicability

The present disclosure provides an apparatus and method for controlling the direction of an electronic device, which is configured such that an electronic device is automatically rotated to a target rotation angle when an operator inputs the target rotation angle of the electronic device to a controller, thereby reducing costs.

## Claims

1. An apparatus for controlling the direction of an electronic device, comprising:
a motor configured to adjust a rotation angle of the electronic device;
a sensor configured to sense a current rotation angle of the electronic device; and
a control unit configured to, when a target rotation angle of the electronic device is inputted, operate the motor to rotate the electronic device from the current rotation angle to the target rotation angle.

2. The apparatus according to claim 1, wherein
the electronic device is installed on a support pole erected on a ground surface and is disposed spaced apart upward from the ground surface, and
the sensor is a photo sensor that senses a current rotation angle of the electronic device with respect to the support pole.

3. The apparatus according to claim 1, wherein
the electronic device is installed on a support pole erected on a ground surface and is disposed spaced apart upward from the ground surface, and
the sensor is an acceleration sensor or a gyro sensor that senses a current rotation angle of the electronic device with respect to the ground surface.

4. The apparatus according to claim 1, further comprising
a memory configured to store a set rotation angle of the electronic device,
wherein the control unit, when a target rotation angle of the electronic device is inputted, compares the target rotation angle with the set rotation angle before operating the motor, checks whether the target rotation angle is within an allowable range of the set rotation angle, and operates the motor if the target rotation angle is within the allowable range of the set rotation angle.

5. The apparatus according to claim 1, wherein the control unit, when a target rotation angle of the electronic device is inputted, determines, before operating the motor, to rotate the electronic device in one direction if the target rotation angle is larger than the current rotation angle and to rotate the electronic device in the other direction if the target rotation angle is smaller than the current rotation angle.

6. The apparatus according to claim 1, wherein the control unit, when operating the motor, operates the motor at a maximum speed if the difference between the current rotation angle and the target rotation angle is equal to or greater than a set angle, and operates the motor at a speed slower than the maximum speed if the difference between the current rotation angle and the target rotation angle is less than the set angle.

7. The apparatus according to claim 4, wherein the control unit, after operating the motor, stores the current rotation angle as the set rotation angle in the memory if a rotation shaft of the motor stops rotating before the electronic device is rotated to the target rotation angle.

8. The apparatus according to claim 4, wherein the control unit, after operating the motor, stops the motor if the electronic device is rotated to the target rotation angle and stores the current rotation angle as the set rotation angle in the memory.

9. A method for controlling the direction of an electronic device by operating a motor that adjusts a rotation angle of the electronic device, the method comprising:
a sensing step of sensing a current rotation angle of the electronic device by a sensor; and
a motor operating step of, when a target rotation angle of the electronic device is inputted, operating the motor to rotate the electronic device from the current rotation angle to the target rotation angle.

10. The method according to claim 9, wherein
the electronic device is installed on a support pole erected on a ground surface and is disposed spaced apart upward from the ground surface, and
the sensor is a photo sensor that senses a current rotation angle of the electronic device with respect to the support pole.

11. The method according to claim 9, wherein
the electronic device is installed on a support pole erected on a ground surface and is disposed spaced apart upward from the ground surface, and
the sensor is an acceleration sensor or a gyro sensor that senses a current rotation angle of the electronic device with respect to the ground surface.

12. The method according to claim 9, further comprising
a validity checking step of, before the motor operating step, when a target rotation angle of the electronic device is inputted, comparing the target rotation angle with a set rotation angle of the electronic device stored in a memory and checking whether the target rotation angle is within an allowable range of the set rotation angle,
wherein the motor operating step is performed when the target rotation angle is within the allowable range of the set rotation angle in the validity checking step.

13. The method according to claim 9, further comprising
a rotation direction determining step of, before the motor operating step, when a target rotation angle of the electronic device is inputted, comparing the target rotation angle with the current rotation angle and determining a rotation direction of the electronic device,
wherein the rotation direction determining step determines to rotate the electronic device in one direction when the target rotation angle is larger than the current rotation angle, and determines to rotate the electronic device in the other direction when the target rotation angle is smaller than the current rotation angle.

14. The method according to claim 9, wherein
the motor operating step comprises a motor speed controlling step of controlling an operation speed of the motor by comparing the difference between the current rotation angle and the target rotation angle with a set angle, and
the motor speed controlling step operates the motor at a maximum speed if the difference between the current rotation angle and the target rotation angle is equal to or greater than the set angle, and operates the motor at a speed slower than the maximum speed if the difference between the current rotation angle and the target rotation angle is less than the set angle.

15. The method according to claim 12, further comprising
a motor abnormality processing step of, after the motor operating step, storing the current rotation angle as the set rotation angle in the memory if a rotation shaft of the motor stops rotating before the electronic device is rotated to the target rotation angle.

16. The method according to claim 12, further comprising
a motor stopping step of, after the motor operating step, stopping the motor if the electronic device is rotated to the target rotation angle and storing the current rotation angle as the set rotation angle in the memory.
